# FASCICULE DE BREVET EUROPEEN

(11) **EP 0 791 415 B1**
(45) Date de publication et mention de la délivrance du brevet: **29.05.2002**
(21) Numéro de dépôt: 97400214.9
(22) Date de dépôt: 30.01.1997
(51) Int. Cl.: B21D 47/00, B62D 25/06

(54) **Procédé de réalisation d'un pavillon de véhicule, pavillon de véhicule et véhicule comportant un tel pavillon**
Verfahren zur Herstellung eines Kraftfahrzeugdachs, Fahrzeugdach und Fahrzeug mit diesem Dach
Method of making a vehicle ceiling, vehicle ceiling and vehicle with that ceiling

(30) Priorité: 23.02.1996 FR 9602254
(43) Date de publication de la demande: 27.08.1997
(73) Titulaire: GEC ALSTHOM TRANSPORT SA, 75116 Paris (FR)
(72) Inventeur: Simon, Vincent, 59300 Valenciennes (FR)
(74) Mandataire: Gosse, Michel

(56) Documents cités:
- FR-A- 2 414 100
- US-A- 1 645 582
- US-A- 2 031 779
- US-A- 2 335 181

## Description

La présente invention concerne les procédés de réalisation des pavillons de véhicules, ferroviaires ou routier en général, et porte, plus particulièrement, sur un procédé de réalisation d'un pavillon de véhicule, sur un pavillon de véhicule et sur un véhicule comportant un tel pavillon.

Les pavillons de véhicules, notamment ferroviaires, de l'état de la technique se composent de pièces longitudinales soudées à des pièces courbées et de tôles planes.

Il est connu de l'état de la technique un procédé de réalisation des pavillons de véhicules comportant les étapes principales décrites ci-après.

Les pièces longitudinales sont réalisées à partir de tôles. Ces tôles sont débitées puis pliées de manière à obtenir la forme désirée.

Les pièces courbées sont également réalisées à partir de tôles. Ces tôles sont cintrées au moyen d'une cintreuse à galets.

Les pièces longitudinales et les pièces courbées sont positionnées entre elles de façon appropriée au moyen de butées fixes puis bridées.

La structure de pavillon ainsi obtenue est assemblée par soudage.

Les tôles planes sont soudées à la structure de pavillon.

Un tel pavillon de véhicule et son procédé de réalisation ont pour inconvénient principal que les pièces courbées par cintrage présentent des défauts de courbure.

Une conséquence est que les tôles planes soudées sur les pièces courbées par cintrage comportent les mêmes défauts de courbure que les pièces courbées.

Un autre inconvénient du pavillon de véhicule et du procédé de réalisation de l'art antérieur est que pour obtenir un pavillon de véhicule comportant plusieurs rayons de courbure, le pavillon doit être constitué de plusieurs pièces courbées par cintrage de manière à pouvoir suivre le gabarit souhaité.

Un autre inconvénient du pavillon de véhicule et du procédé de réalisation de l'art antérieur est que la surface d'échange thermique du pavillon de véhicule est importante.

Il est également connu, du document US-A-1 645 582, un autre procédé de réalisation d'un pavillon dans lequel les pièces longitudinales et les pièces courbées formant la structure support des tôles planes sont réalisées par emboutissage. Un tel pavillon et son procédé de fabrication présentent toutefois l'inconvénient d'être relativement coûteux et d'offrir un éventail de formes pour les pièces courbées limité à des formes adaptées à l'emboutissage. De plus, un tel pavillon présente également l'inconvénient d'avoir une surface d'échange thermique entre les tôles planes et la structure support importante.

Aussi un but de l'invention est-il d'obtenir un procédé de réalisation d'un pavillon de véhicule, un pavillon de véhicule et un véhicule comportant un tel pavillon, basés sur un nouveau concept.

Un autre but de l'invention est d'obtenir un procédé de réalisation d'un pavillon de véhicule, un pavillon de véhicule et un véhicule comportant un tel pavillon, ne présentant pas les inconvénients cités précédemment.

Conformément à l'invention, le procédé de réalisation d'un pavillon de véhicule, notamment ferroviaire ou routier, comporte des étapes consistant, principalement, à réaliser des éléments courbes transversaux et des éléments longitudinaux, lesdits éléments courbes transversaux formant des éléments de liaison entre lesdits éléments longitudinaux, à fixer lesdits éléments courbes transversaux et lesdits éléments longitudinaux entre eux de manière à former une structure support de pavillon et à fixer des éléments plans sur ladite structure support de pavillon, et se caractérise en ce que lesdites étapes consistant à réaliser lesdits éléments courbes transversaux et/ou lesdits éléments longitudinaux sont des étapes de découpe de tôles.

Le procédé de l'invention satisfait de préférence également à l'une quelconque des caractéristiques suivantes:
- l'une des étapes de découpe de tôles permet la découpe d'encoches sur lesdits éléments courbes transversaux et lesdits éléments longitudinaux,
- une étape consiste à assembler lesdits éléments courbes transversaux et lesdits éléments longitudinaux par emboîtement desdites encoches,
- une étape consiste à fixer entre eux lesdits éléments longitudinaux et lesdits éléments courbes transversaux,
- une étape consiste à fixer lesdits éléments plans sur ladite structure support de pavillon,
- la découpe desdites tôles est obtenue par découpage laser,
- la fixation desdits éléments courbes, desdits éléments longitudinaux et desdits éléments plans est obtenue par soudage.

Conformément à l'invention, le pavillon de véhicule, notamment ferroviaire ou routier, comporte des éléments courbes transversaux et des éléments longitudinaux, lesdits éléments courbes transversaux formant des éléments de liaison entre lesdits éléments longitudinaux, lesdits éléments courbes transversaux et lesdits éléments longitudinaux étant fixés entre eux de manière à former une structure support de pavillon et comporte des éléments plans susceptibles d'être fixés sur ladite structure support de pavillon, et se caractérise en ce que lesdits éléments courbes transversaux et/ou lesdits éléments longitudinaux sont obtenus par découpage de tôles.

Le pavillon de l'invention satisfait de préférence également à l'une quelconque des caractéristiques suivantes:
- lesdits éléments courbes et lesdits éléments longitudinaux comportent des encoches disposées de manière à ce que lesdits éléments courbes et lesdits éléments longitudinaux soient susceptibles de s'emboîter les uns avec les autres pour former ladite structure support de pavillon,
- lesdits éléments plans sont disposées sur ladite structure support de pavillon,
- la découpe desdites tôles est obtenue par découpage laser,
- la fixation desdits éléments courbes, desdits éléments longitudinaux et desdits éléments plans est obtenue par soudage.

Conformément à l'invention, le véhicule, notamment ferroviaire ou routier, comporte au moins un pavillon tel que défini ci-dessus.

Un avantage du procédé de réalisation d'un pavillon de véhicule, du pavillon de véhicule et du véhicule comportant un tel pavillon de l'invention est une très bonne qualité esthétique finale.

En effet, les éléments courbes ont des rayons de courbure très précis et s'appliquent parfaitement sur les éléments plans.

Un autre avantage du procédé de réalisation d'un pavillon de véhicule, du pavillon de véhicule et du véhicule comportant un tel pavillon de l'invention est une simplification de la structure du pavillon.

En effet, les éléments courbes sont réalisés en une seule pièce quelque soit le rayon de courbure de ces éléments.

Il résulte de ce qui précède que l'invention ne présente pas l'inconvénient lié à l'obtention d'un pavillon comportant plusieurs rayons de courbure.

Un autre avantage du procédé de réalisation d'un pavillon de véhicule, du pavillon de véhicule et du véhicule comportant un tel pavillon de l'invention est une diminution de la surface d'échange thermique.

Un autre avantage du procédé de réalisation d'un pavillon de véhicule, du pavillon de véhicule et du véhicule comportant un tel pavillon de l'invention est l'absence de redressage ou de planage, d'où une diminution du coût.

D'autres buts, caractéristiques et avantages de l'invention apparaîtront à la lecture de la description du mode de réalisation préféré du procédé de réalisation d'un pavillon de véhicule, du pavillon de véhicule et du véhicule comportant un tel pavillon, description faite en liaison avec les dessins dans lesquels:
- la figure 1 est une vue générale du pavillon, notamment de véhicule ferroviaire ou routier, conforme à l'invention,
- la figure 2 est une vue des encoches permettant aux éléments courbes et aux éléments longitudinaux de s'emboîter les uns avec les autres.

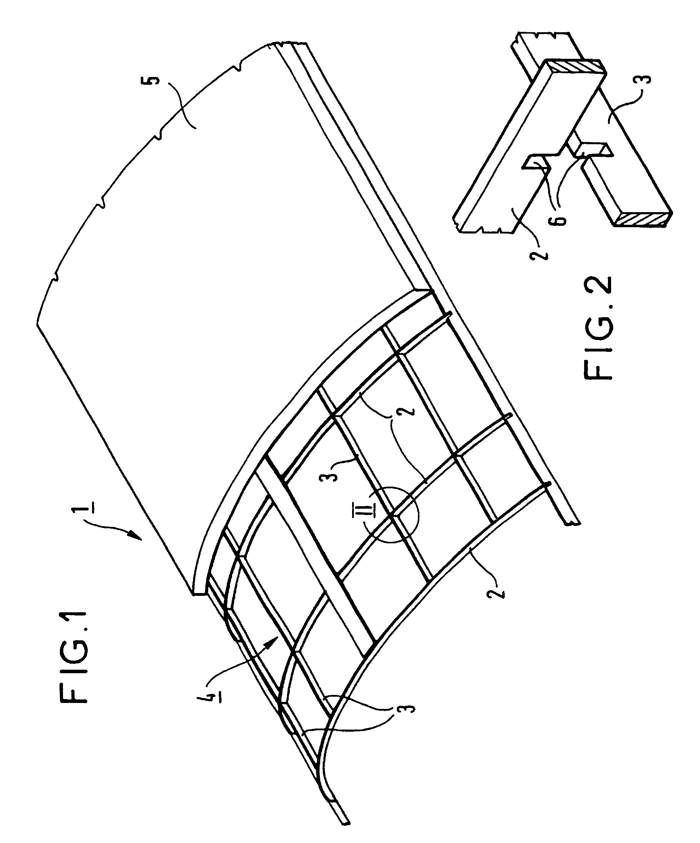

La figure 1 est une vue générale du pavillon, notamment de véhicule ferroviaire ou routier, conforme à l'invention.

Le pavillon 1, notamment de véhicule ferroviaire ou routier, comporte des éléments courbes 2 et des éléments longitudinaux 3.

Les éléments courbes 2 et les éléments longitudinaux 3 sont fixés entre eux de manière à former une structure support 4 de pavillon.

Le pavillon 1 comporte également des éléments plans 5 susceptibles d'être fixés sur la structure support 4 de pavillon.

Conformément à une caractéristique essentielle du pavillon de l'invention, les éléments courbes 2 et/ou les éléments longitudinaux 3 et/ou les éléments plans 5 sont obtenus par découpage de tôles.

Le terme tôle a un sens général et désigne une feuille en un matériau quelconque, notamment en fer, en acier, en alluminium, en alliage, en plastique.

Les éléments courbes 2 et les éléments longitudinaux 3 comportent des encoches 6 disposées de manière à ce que les éléments courbes et les éléments longitudinaux soient susceptibles de s'emboîter les uns avec les autres pour former la structure support 4 de pavillon.

Les éléments plans 5 sont disposées sur la structure support 4 de pavillon.

A titre d'exemple, la découpe des tôles est obtenue par découpage laser.

La fixation des éléments courbes 2, des éléments longitudinaux 3 et des éléments plans 5 est, par exemple, obtenue par soudage.

Il est évident qu'un tel pavillon 1 peut être destiné à un véhicule, notamment ferroviaire ou routier.

Le procédé de réalisation du pavillon 1, notamment de véhicule ferroviaire ou routier, selon l'invention comporte des étapes consistant, principalement, à réaliser les éléments courbes 2 et les éléments longitudinaux 3, à fixer les éléments courbes 2 et les éléments longitudinaux 3 entre eux de manière à former la structure support 4 de pavillon et à fixer les éléments plans 5 sur la structure support 4 de pavillon.

Conformément à une caractéristique essentielle du procédé de l'invention, les étapes consistant à réaliser les éléments courbes 2 et/ou les éléments longitudinaux 3 et/ou les éléments plans 5 sont des étapes de découpe de tôles.

L'une des étapes de découpe de tôles permet la découpe d'encoches 6 sur les éléments courbes 2 et sur les éléments longitudinaux 3.

Une étape consiste à assembler les éléments courbes 2 et les éléments longitudinaux 3 par emboîtement des encoches 6.

Une étape consiste à fixer entre eux les éléments courbes 2 et les éléments longitudinaux 3.

Une étape consiste à fixer les éléments plans 5 sur la structure support 4 de pavillon.

Comme indiqué précédemment, la découpe des tôles est, par exemple, obtenue par découpage laser.

La fixation des éléments courbes 2, des éléments longitudinaux 3 et des éléments plans 5 est, par exemple, obtenue par soudage.

## Revendications

1. Procédé de réalisation d'un pavillon (1), de véhicule, notamment ferroviaire ou routier, ledit procédé comportant des étapes consistant, principalement, à réaliser des éléments courbes transversaux (2) et des éléments longitudinaux (3), lesdits éléments courbes transversaux (2) formant des éléments de liaison entre lesdits éléments longitudinaux (3), à fixer lesdits éléments courbes transversaux (2) et lesdits éléments longitudinaux (3) entre eux de manière à former une structure support (4) de pavillon et à fixer des éléments plans (5) sur ladite structure support (4) de pavillon, ledit procédé étant **caractérisé en ce que** lesdites étapes consistant à réaliser lesdits éléments courbes transversaux (2) et/ou lesdits éléments longitudinaux (3) sont des étapes de découpe de tôles.

2. Procédé selon la revendication 1, dans lequel l'une des étapes de découpe de tôles permet la découpe d'encoches (6) sur lesdits éléments courbes transversaux (2) et lesdits éléments longitudinaux (3).

3. Procédé selon l'une quelconque des revendications 1 ou 2, comportant une étape consistant à assembler lesdits éléments courbes transversaux (2) et lesdits éléments longitudinaux (3) par emboîtement desdites encoches (6).

4. Procédé selon l'une quelconque des revendications 1 à 3, comportant une étape consistant à fixer entre eux lesdits éléments courbes transversaux (2) et lesdits éléments longitudinaux (3).

5. Procédé selon l'une quelconque des revendications 1 à 4, comportant une étape consistant à fixer lesdits éléments plans (5) sur ladite structure support (4) de pavillon.

6. Procédé selon l'une quelconque des revendications 1 à 5, dans lequel la découpe desdites tôles est obtenue par découpage laser.

7. Procédé selon l'une quelconque des revendications 1 à 6, dans lequel la fixation desdits éléments courbes transversaux (2), desdits éléments longitudinaux (3) et desdits éléments plans (5) est obtenue par soudage.

8. Pavillon (1) de véhicule, notamment ferroviaire ou routier, comportant des éléments courbes transversaux (2) et des éléments longitudinaux (3), lesdits éléments courbes transversaux (2) formant des éléments de liaison entre lesdits éléments longitudinaux (3), lesdits éléments courbes transversaux et lesdits éléments longitudinaux étant fixés entre eux de manière à former une structure support (4) de pavillon et comportant des éléments plans (5) susceptibles d'être fixés sur ladite structure support (4) de pavillon, **caractérisé en ce que** lesdits éléments courbes transversaux (2) et/ou lesdits éléments longitudinaux (3) sont éléments de tôle plane obtenus par découpage de tôles.

9. Pavillon selon la revendication 8, dans lequel lesdits éléments courbes transversaux (2) et lesdits éléments longitudinaux (3) comportent des encoches (6) disposées de manière à ce que lesdits éléments courbes transversaux et lesdits éléments longitudinaux soient susceptibles de s'emboîter les uns avec les autres pour former ladite structure support (4) de pavillon.

10. Pavillon selon l'une quelconque des revendications 8 et 9, dans lequel lesdits éléments plans (5) sont disposées sur ladite structure support (4) de pavillon.

11. Pavillon selon l'une quelconque des revendications 8 à 10, dans lequel la découpe desdites tôles est obtenue par découpage laser.

12. Pavillon selon l'une quelconque des revendications 8 à 11, dans lequel la fixation desdits éléments courbes transversaux (2), desdits éléments longitudinaux (3) et desdits éléments plans (5) est obtenue par soudage.

13. Véhicule, notamment ferroviaire ou routier, comportant au moins un pavillon selon la revendication 8.

## Claims

1. A method of making a vehicle roof (1), in particular for a rail vehicle or for a road vehicle, said method comprising steps consisting mainly in making curved transverse elements (2) and longitudinal elements (3), said curved transverse elements (2) forming link elements between said longitudinal elements (3), in fixing together said curved transverse elements (2) and said longitudinal elements (3) so as to form a roof support structure (4), and in fixing plane elements (5) to said roof support structure (4), said method being **characterized in that** said steps consisting in making said curved transverse elements (2) and/or said longitudinal elements (3) are steps in which sheet material is cut up.

2. A method according to claim 1, in which one of the steps in which sheet material is cut up makes it possible to cut out notches (6) in said curved transverse elements (2) and in said longitudinal elements (3).

3. A method according to claim 1 or 2, further comprising a step consisting in assembling together said curved transverse elements (2) and said longitudinal elements (3) by interfitting said notches (6).

4. A method according to any one of claims 1 to 3, further comprising a step consisting in fixing together said curved transverse elements (2) and said longitudinal elements (3).

5. A method according to any one of claims 1 to 4, further comprising a step consisting in fixing said plane elements (5) to said support roof structure (4).

6. A method according to any one of claims 1 to 5, in which the sheet material is cut up by laser cutting.

7. A method according to any one of claims 1 to 6, in which said curved transverse elements (2), said longitudinal elements (3) and said plane elements (5) are fixed together by welding.

8. A vehicle roof (1), in particular for a rail vehicle or for a road vehicle, comprising curved transverse elements (2) and longitudinal elements (3), said curved transverse elements (2) forming link elements between said longitudinal elements (3), said curved transverse elements and said longitudinal elements being fixed together to form a roof support structure (4), and said roof further comprising plane elements (5) suitable for being fixed to said roof support structure (4), said vehicle roof being **characterized in that** said curved transverse elements (2) and said longitudinal elements (3) are plane sheet material elements obtained by cutting up sheet material.

9. A vehicle roof according to claim 8, in which said curved transverse elements (2) and said longitudinal elements (3) are provided with notches (6) disposed so that said curved transverse elements and said longitudinal elements can be interfitted with one another to form said roof support structure (4).

10. A vehicle roof according to claim 8 or 9, in which said plane elements (5) are disposed on said roof support structure (4).

11. A vehicle roof according to any one of claims 8 to 10, in which said sheet material is cut up by laser cutting.

12. A vehicle roof according to any one of claims 8 to 11, in which said curved transverse elements (2), said longitudinal elements (3) and said plane elements (5) are fixed together by welding.

13. A vehicle, in particular a rail vehicle or a road vehicle, including at least one vehicle roof according to claim 8.

## Patentansprüche

1. Verfahren zur Herstellung eines Fahrzeugdachs (1), insbesondere für Schienen- oder Straßenfahrzeuge, wobei das Verfahren Schritte aufweist, bestehend im wesentlichen aus der Herstellung von gekrümmten Quer- (2) und Längselementen (3), wobei die gekrümmten Querelemente (2) Verbindungselemente zwischen den Längselementen (3) bilden, aus der gegenseitigen Befestigung der gekrümmten Querelemente (2) und der Längselemente (3) derart, daß eine Dach-Trägerstruktur (4) gebildet wird, und aus der Befestigung der Flächenelemente (5) auf der Dach-Trägerstruktur (4), wobei das Verfahren **dadurch gekennzeichnet ist, daß** die aus der Herstellung der gekrümmten Querelemente (2) und/oder der Längselemente (3) bestehenden Schritte Blech-Schneidschnitte sind.

2. Verfahren nach Anspruch 1, wobei sich bei einem der Blech-Schneidschritte Kerben (6) in die gekrümmten Querelemente (2) und Längselemente (3) schneiden lassen.

3. Verfahren nach einem der Ansprüche 1 oder 2, umfassend einen Schritt, bestehend aus der Zusammenfügung der gekrümmten Querelemente (2) und der Längselemente (3) durch Zusammenstecken der Kerben (6).

4. Verfahren nach einem der Ansprüche 1 bis 3, umfassend einen Schritt, bestehend aus der gegenseitigen Befestigung der gekrümmten Querelemente (2) und der Längselemente (3).

5. Verfahren nach einem der Ansprüche 1 bis 4, umfassend einen Schritt, bestehend aus der Befestigung der Flächenelemente (5) auf der Dach-Trägerstruktur (4).

6. Verfahren nach einem der Ansprüche 1 bis 5, wobei das Zerschneiden der Bleche durch Laserschneiden erreicht wird.

7. Verfahren nach einem der Ansprüche 1 bis 6, wobei die Befestigung der gekrümmten Querelemente (2), der Längselemente (3) und der Flächenelemente (5) durch Schweißen erreicht wird.

8. Fahrzeugdach (1), insbesondere für Schienen- oder Straßenfahrzeuge, das gekrümmte Querelemente (2) und Längselemente (3) aufweist, wobei die gekrümmten Querelemente (2) Verbindungselemente zwischen den Längselementen (3) bilden, wobei die gekrümmten Querelemente und die Längselemente untereinander unter Bildung einer Dach-Trägerstruktur (4) befestigt sind und Flächenelemente (5) tragen, die sich auf der Dach-Trägerstruktur (4) befestigen lassen, **dadurch gekennzeichnet, daß** die gekrümmten Querelemente (2) und/oder die Längselemente (3) flächige Blechelemente sind, die durch Zerschneiden von Blechen erhalten werden.

9. Dach nach Anspruch 8, wobei die gekrümmten Querelemente (2) und die Längselemente (3) Kerben (6) aufweisen, die so angeordnet sind, daß sich die gekrümmten Querelemente und die Längselemente gegenseitig unter Bildung der Dach-Trägerstruktur (4) zusammenstecken lassen.

10. Dach nach einem der Ansprüche 8 und 9, wobei die Flächenelemente (5) auf der Dach-Trägerstruktur (4) angeordnet sind.

11. Dach nach einem der Ansprüche 8 bis 10, wobei das Zerschneiden der Bleche durch Laserschneiden erreicht wird.

12. Dach nach einem der Ansprüche 8 bis 11, wobei die Befestigung der gekrümmten Querelemente (2), der Längselemente (3) und der Flächenelemente (5) durch Schweißen erreicht wird.

13. Fahrzeug, insbesondere Schienen- oder Straßenfahrzeug, mit mindestens einem Dach nach Anspruch 8.
